# FASCICULE DE BREVET EUROPEEN

(11) **EP 4 325 442 B1**
(45) Date de publication et mention de la délivrance du brevet: **29.07.2026**
(21) Numéro de dépôt: 22306230.8
(22) Date de dépôt: 17.08.2022
(51) Int. Cl.: G06V 10/80

(54) **PROCÉDÉ, PROGRAMME D'ORDINATEUR, DISPOSITIF D'IDENTIFICATION DE PROFILÉS**
VERFAHREN, COMPUTERPROGRAMM, PROFILIDENTIFIKATIONSVORRICHTUNG
METHOD, COMPUTER PROGRAM, DEVICE FOR IDENTIFYING PROFILES

(43) Date de publication de la demande: 21.02.2024
(73) Titulaire: ATOS France, 95870 Bezons (FR)
(72) Inventeur: DOUKHAN, Bruce, 63460 Teilhède (FR); DE DOMENICO, Julien, 63360 Saint Beauzire (FR); GOUEZ, Virgil, 63200 Mozac (FR)
(74) Mandataire: Novagraaf Technologies

(56) Documents cités:
- FR-A1- 3 112 502
- Y-P CAO ET AL: "Extracting Sharp Features from RGB-D Images", COMPUTER GRAPHICS FORUM : JOURNAL OF THE EUROPEAN ASSOCIATION FOR COMPUTER GRAPHICS, WILEY-BLACKWELL, OXFORD, vol. 36, no. 8, 24 October 2016 (2016-10-24), pages 138 - 152, XP071489649, ISSN: 0167-7055, DOI: 10.1111/CGF.13069
- ANGELIQUE LOESCH: "Localisation d'objets 3D industriels à l'aide d'un algorithme de SLAM contraint au modèle", PHD THESIS, 1 December 2017 (2017-12-01), XP055728709, Retrieved from the Internet <URL:https://www.researchgate.net/profile/Angelique_Loesch/publication/325055662_Localisation_d'objets_3D_industriels_a_l'aide_d'un_algorithme_de_SLAM_contraint_au_modele/links/5c0ff8d792851c39ebe69edc/Localisation-dobjets-3D-industriels-a-laide-dun-algorithme-de-SLAM-contraint-au-modele.pdf> [retrieved on 20200908]

## Description

La présente invention concerne un procédé d'identification de profilés, et en particulier de pièces de profilés. Elle concerne également un programme d'ordinateur, un dispositif mettant en œuvre un tel procédé.

Le domaine de l'invention est de manière générale le domaine de l'identification de profilés, en particulier dans le domaine industriel.

### État de la technique

Dans le domaine industriel, il existe un besoin pour l'identification automatisée de profilés, par exemple lors de la fabrication d'objets avec différents profilés, mais aussi lors du travail desdits profilés, ou encore lors de la manipulation de profilés.

Il existe différentes techniques qui peuvent être utilisées pour l'identification de profilés. Une première technique consiste à extraire le profilé à partir d'une image. Cette technique est onéreuse car elle nécessite l'utilisation d'optiques de très haute qualité, une luminosité particulière et des capacités de traitement d'images importantes. De plus, cette technique nécessite un étalonnage très précis, ce qui complique son utilisation.

Une deuxième technique consiste à détecter le profilé par profilométrie. Cette technique nécessite aussi un étalonnage et présente en outre l'inconvénient d'avoir recours à des équipements fixes, c'est-à-dire non mobiles.

Une troisième technique propose l'utilisation d'un modèle d'intelligence artificielle, tel que par exemple un réseau neuronal, pour détecter la forme du profilé, et en particulier la forme de la section du profilé, à partir d'une image. Cette technique présente de mauvaises performances pour des raisons liées à la qualité et au contenu de l'image, et nécessite aussi une base d'apprentissage conséquente. De plus, elle nécessite un nouvel apprentissage dès que de nouveaux profilés doivent être détectés.

Le document par Cao et al, intitulé « Extracting Sharp Features from RGB-D images », COMPUTER GRAPHICS FORUM, 24 octobre 2016, XP071489649, concerne une méthode de détection de contours à partir d'images RGB-D. Le document par Loesch et al., intitulé « Localisation d'objets 3D industriels à l'aide d'un algorithme de SLAM contraint au modèle », PhD thesis, 1er décembre 2017, XP055728709, concerne une méthode de localisation/suivi d'objets 3D industriels à l'aide d'un algorithme de SLAM basé sur un modèle 3D des objets. Le document FR 3 112 502 A1 concerne un procédé de contrôle automatique d'un système d'ébavurage de pièces spécifiques comprenant chacune au moins un profilé.

Un but de la présente invention est de remédier à au moins un des inconvénients des solutions de l'état de la technique.

Un autre but de l'invention est de proposer une solution d'identification de profilé, et en particulier la forme de la section du profilé, plus efficace, moins onéreuse à déployer, et plus flexible d'utilisation de sorte qu'elle peut s'adapter à différents environnements mais aussi à de nouveaux profilés.

### Exposé de l'invention

L'invention est définie par le jeu de revendications annexé. L'invention propose d'atteindre au moins l'un des buts précités par un procédé d'identification d'un profilé, en particulier d'un profilé de pièce, en particulier la forme de la section du profilé, ledit procédé comprenant une phase d'acquisition d'images pour obtenir une image RGB, une image infrarouge, IR, et une image en profondeur dudit profilé, ledit procédé comprenant en outre une phase de traitement comprenant les étapes suivantes :
- extraction de ladite image RGB, respectivement de ladite image IR, d'une zone d'intérêt correspondant audit profilé et mémorisation de ladite zone d'intérêt comme image d'intérêt RGB, respectivement comme image d'intérêt IR ;
- construction d'une image consolidée à partir desdites images d'intérêt RGB et IR ;
- détection du contour dudit profilé dans ladite image consolidée ; et
- identification dudit profilé par comparaison dudit contour à une base de données de contours de profilés.

Ainsi, l'invention propose de reconnaître un profilé à partir d'images de ce profilé, et en particulier de la section de ce profilé, sans avoir recours à un modèle d'intelligence artificielle pour le traitement d'images, et par conséquent sans nécessiter une base conséquente d'images d'apprentissage. Pour ces raisons, l'invention est plus simple, plus rapide et moins coûteuse à déployer que les solutions de l'état de la technique basées sur l'utilisation d'un modèle intelligent. De plus, l'invention permet de s'adapter de manière plus rapide et moins coûteuse aux nouveaux profilés à reconnaître, comparées à ces solutions, puisqu'elle ne nécessite pas de nouvel entrainement.

L'invention permet de reconnaitre des profilés en se basant sur des images dudit profilé sans utilisation de dispositifs de profilométrie. Ainsi, l'invention est moins coûteuse que les solutions de l'état de la technique basées sur la profilométrie, ne nécessite pas ou peu d'étalonnage, et peut être embarquée sur des dispositifs mobiles.

En outre, l'invention propose de reconnaître des profilés en se basant sur plusieurs images de natures différentes, à savoir au moins une image RGB, une image infrarouge et une image de profondeur. Ainsi, l'invention est moins sensible à des différences de luminosité, ou à des images de moindre qualité, comparée aux solutions de l'état de la technique basées sur une extraction d'un profilé à partir d'une image. Elle peut être mise en œuvre avec des optiques classiques, et avec des variations plus importantes de luminosité, ce qui la rend moins coûteuse à déployer et plus précise que ces solutions.

Le profilé peut être un profilé en métal, par exemple en aluminium, en PVC, etc.

Suivant des modes de réalisation, lors de la phase d'acquisition, l'image infrarouge peut être captée par une caméra infrarouge. Suivant un exemple de réalisation non limitatif, l'image IR peut être une image IR reconstruite avec deux images IR prises par deux caméras IR, à savoir une caméra IR gauche et une caméra IR droite, formant une caméra stéréoscopique. Dans ce cas, les deux caméras infrarouges sont disposées à une distance connue, dite baseline, l'une de l'autre et l'image IR est obtenue à partir des deux images IR gauche et droite obtenues respectivement par la caméra IR gauche et la caméra IR droite.

Suivant des modes de réalisation, lors de la phase d'acquisition, l'image RGB peut être captée par une caméra RGB.

Suivant des modes de réalisation, lors de la phase d'acquisition, l'image de profondeur peut être captée par une caméra.

Alternativement, l'image de profondeur peut être obtenue, par construction, à partir d'au moins une desdites caméra IR et RGB. Ainsi, l'utilisation d'une caméra dédiée à l'acquisition de l'image de profondeur est évitée, ce qui diminue le coût de la solution proposée par la présente invention En particulier, l'image de profondeur peut être obtenue à partir :
- d'images IR obtenues par une caméra IR stéréoscopique, tel que décrite plus haut ;
- et l'image RGB obtenue par la caméra RGB.
La caméra IR stéréoscopique, ou les deux caméras IR droite et gauche formant la caméra stéréoscopique IR, permettent de calculer la distance pour chaque pixel et de l'appliquer sur l'image RGB pour créer une image de profondeur.

Suivant des modes de réalisation, l'étape d'extraction d'une zone d'intérêt dans l'image IR peut comprendre une conservation de points de ladite image IR se trouvant à une distance, ou dans une gamme de distances, prédéterminée, lesdits points formant une zone d'image IR.

De manière similaire, l'étape d'extraction d'une zone d'intérêt dans l'image RGB peut comprendre une conservation de points de ladite image RGB se trouvant à une distance, ou dans une gamme de distances, prédéterminée, lesdits points formant une zone d'image RGB.

La distance de chaque point (ou pixel) de l'image RGB, respectivement de l'image IR, peut être obtenue grâce à l'image de profondeur qui indique la distance entre ledit point (ou pixel) et la position depuis laquelle ladite image a été acquise. Ainsi, avec l'image de profondeur, il est assez simple et direct de retrouver la distance de chaque point dans l'image RGB, respectivement dans l'image IR.

La distance prédéterminée peut être égale à la distance entre le point d'acquisition de l'image et la position du profilé par rapport audit point d'acquisition, éventuellement augmentée/diminuée d'une valeur d'incertitude. Cette ou ces valeurs peuvent être déterminées par essais ou lors d'un étalonnage rapide. Alternativement, cette ou ces valeurs peuvent être connues *a priori* en fonction de la position des caméras utilisées par rapport au profilé à identifier.

Suivant des modes de réalisation, la zone d'image RGB peut être utilisée comme image d'intérêt RGB.

Suivant des modes de réalisation, la zone d'image IR peut être utilisée comme image d'intérêt IR.

Cependant, l'image de profondeur peut ne pas être suffisamment précise, par exemple à cause de reflets. Ainsi, lorsque l'image de profondeur présente une erreur, par exemple une erreur supérieure ou égale à 1mm ou 2mm, alors l'utilisation de la zone d'image IR comme image d'intérêt IR, respectivement de la zone d'image RGB comme image d'intérêt RGB, peut ne pas permettre de reconnaître directement le profilé d'où les traitements ultérieurs. En effet, l'image de profondeur permet de segmenter et donc d'identifier la zone dans laquelle se trouve le profilé. Cependant, en fonction de la qualité de l'image de profondeur, il est possible que celle-ci ne permette pas d'extraire la zone comprenant le profilé ou génère une erreur lors de cette extraction.

Suivant des modes de réalisation alternatifs, l'étape d'extraction peut en outre comprendre les étapes suivantes :
- construction d'un premier masque, dit premier masque RGB, à partir de la zone d'image RGB,
- construction d'un premier masque, dit premier masque IR, à partir de la zone d'image IR,
- obtention de l'image d'intérêt RGB par convolution de l'image RGB avec ledit premier masque RGB, et
- obtention de l'image d'intérêt IR par convolution de l'image IR avec ledit premier masque IR.

Une image d'intérêt IR, respectivement une image d'intérêt RGB, ainsi obtenue permettent de reconnaître le profilé, malgré des erreurs qui peuvent exister dans l'image de profondeur. Autrement dit, dans ces modes de réalisation, l'invention permet d'être insensible aux erreurs qui peuvent exister dans l'image de profondeur, telles que par exemple des erreurs dues à des reflets.

Suivant des modes de réalisation, le premier masque RGB peut être construit par dilation de la zone d'image RGB.

Suivant des modes de réalisation, le premier masque IR peut être construit par dilation de la zone d'image IR.

Suivant une caractéristique optionnelle, mais avantageuse, le procédé selon l'invention peut comprendre avant l'étape de construction de l'image consolidée, une étape de filtrage de l'image d'intérêt RGB, ladite image consolidée étant réalisée à partir de ladite image d'intérêt RGB ainsi filtrée.

Alternativement, ou en plus, le procédé selon l'invention peut comprendre, avant l'étape de construction de l'image consolidée, une étape de filtrage de l'image d'intérêt IR, ladite image consolidée étant réalisée à partir de ladite image d'intérêt IR ainsi filtrée.

Une telle étape de filtrage de l'image d'intérêt RGB, respectivement de l'image d'intérêt IR, peut comprendre l'application d'un filtre bilatéral pour retirer du bruit de ladite image d'intérêt tout en préservant les bords, en particulier les bords du profilé, dans ladite image d'intérêt.

Alternativement, ou en plus, une telle étape de filtrage de l'image d'intérêt RGB, respectivement de l'image d'intérêt IR, peut comprendre l'application d'un filtre poivre et sel pour retirer du bruit dû à l'acquisition par une caméra numérique, le cas échéant.

L'étape de construction de l'image consolidée comprend les étapes suivantes :
- intensification de contours dans l'image d'intérêt RGB, respectivement dans l'image d'intérêt IR,
- construction d'un deuxième masque, dit deuxième masque RGB, à partir de l'image d'intérêt RGB,
- construction d'un deuxième masque, dit deuxième masque IR, à partir de ladite image d'intérêt IR,
- retrait de contours n'appartenant pas au profilé dans l'image d'intérêt RGB par convolution de ladite image d'intérêt RGB avec ledit deuxième masque RGB,
- retrait de contours n'appartenant pas au profilé dans l'image d'intérêt IR par convolution de ladite image d'intérêt IR avec ledit deuxième masque IR, et
- obtention de l'image consolidée par ajout, ou superposition, de ladite image d'intérêt RGB à ladite image d'intérêt IR.

L'utilisation d'un tel deuxième masque permet de créer un espace vide entre les contours du profilé et les contours proches. Cela permet d'éliminer ces contours en utilisant ce deuxième masque sur chaque image d'intérêt, ce qui permet une identification plus précise et plus efficace du profilé.

Suivant des modes de réalisation, l'intensification de contours dans l'image d'intérêt RGB peut être réalisée en appliquant un filtre 2D à ladite image d'intérêt RGB.

Suivant des modes de réalisation, l'intensification de contours dans l'image d'intérêt IR peut être réalisée en appliquant un filtre 2D à ladite image d'intérêt IR.

Suivant des modes de réalisation, le deuxième masque RGB peut être obtenue par érosion de l'image d'intérêt RGB.

Suivant des modes de réalisation, le deuxième masque IR peut être obtenue par érosion de l'image d'intérêt IR.

Suivant des modes de réalisation avantageux, l'étape de construction de l'image consolidée peut en outre comprendre une étape de recentrage des images d'intérêt IR et RGB de sorte à aligner les contours du profilé dans lesdites images d'intérêt, en particulier après les étapes de retrait de contours et avant l'étape d'obtention de l'image consolidée.

Ainsi, lorsque le profilé ne se trouve pas au même emplacement sur les images IR et RGB, et donc sur les images d'intérêt IR et RGB, cette étape de recentrage permet d'éliminer le décalage en position du profilé sur lesdites images d'intérêt et donc d'obtenir une image consolidée plus précise par ajout, ou superposition, desdites images d'intérêt IR et RGB. En effet, un décalage en position du profilé dans les images d'intérêt entraînera un décalage entre les contours dudit profilé dans l'image consolidée, ce qui aura pour conséquence une imprécision, voire une impossibilité, d'identification du profilé dans l'image consolidée.

Suivant des modes de réalisation, l'étape de recentrage peut comprendre les étapes suivantes :
- recherche, dans l'une desdites images d'intérêt IR et RGB, d'un motif présent dans l'autre desdites images d'intérêt IR et RGB,
- modification de la position d'au moins une desdites images d'intérêt pour aligner ledit motif dans lesdites images d'intérêt, et
- éventuellement, redimensionnement d'au moins une desdites images d'intérêt de sorte à obtenir la même taille pour lesdites images d'intérêt.

Suivant des modes de réalisation, la recherche de motif peut être réalisée par corrélation des images d'intérêt IR et RGB.

Suivant des modes de réalisation, le redimensionnement d'une image d'intérêt peut être réalisée par rognage de ladite image d'intérêt.

Avantageusement, dans certains modes de réalisation, l'ajout de l'image d'intérêt RGB à l'image d'intérêt IR peut être réalisée en affectant des poids différents auxdites images d'intérêt.

En particulier, l'ajout de l'image d'intérêt RGB à l'image d'intérêt IR peut être réalisée en affectant un poids plus grand à l'image d'intérêt IR.

L'utilisation de poids différents, et en particulier d'un poids plus grand à l'image d'intérêt IR, permet d'obtenir en gris le bruit de l'image RGB et en blanc les contours du profilé, dans l'image consolidée.

Suivant des modes de réalisation, l'étape de construction de l'image consolidée peut comprendre une étape de seuillage sur les niveaux de gris de l'image d'intérêt RGB obtenue à l'étape de retrait, respectivement de l'image d'intérêt IR obtenue à l'étape de retrait, pour éliminer dans ladite image d'intérêt les pixels dont la couleur est noire ou proche du noir.

Suivant des modes de réalisation, l'étape de construction de l'image consolidée peut en outre comprendre une étape de seuillage sur les niveaux de gris de l'image consolidée pour ne conserver que les pixels blancs dans ladite image consolidée.

Ainsi, la détection de contour dans l'image consolidée est plus précise et plus simple.

Selon un autre aspect de l'invention, il est proposé un programme d'ordinateur comprenant des instructions exécutables qui, lorsqu'elles sont exécutées par un appareil informatique, mettent en en œuvre toutes les étapes de la phase de traitement du procédé selon l'invention.

Le programme d'ordinateur peut être en tout langage informatique, tel que par exemple en langage machine traditionnellement utilisé pour le calcul scientifique, par exemple en C, C++, C#, Python, etc.

Selon un autre aspect de l'invention, il est proposé un dispositif d'identification d'un profilé comprenant des moyens configurés pour mettre en œuvre toutes les étapes du procédé selon l'invention.

De manière générale, le dispositif peut comprendre, en termes de moyens physiques, toutes les caractéristiques décrites plus haut en référence au procédé selon l'invention, et qui ne sont pas reprises ici par soucis de concision.

Suivant des modes de réalisation, le dispositif selon l'invention peut comprendre :
- au moins un moyen d'acquisition d'une image infrarouge, d'une image RGB et d'une image profondeur, dudit profilé ; et
- au moins une unité de traitement configurée pour réaliser la phase de traitement du procédé d'identification d'un profilé selon l'invention ; et
- éventuellement, au moins une dalle ou ring de lumière éclairant ledit profilé.

Suivant des modes de réalisation, le dispositif selon l'invention peut comprendre une caméra infrarouge pour acquérir l'image IR.

Suivant des modes de réalisation, le dispositif selon l'invention peut comprendre une caméra RGB pour acquérir l'image RGB.

Suivant des modes de réalisation, le dispositif selon l'invention peut comprendre une caméra pour acquérir l'image de profondeur. Alternativement, le dispositif selon l'invention peut comprendre une unité de calcul pour obtenir l'image de profondeur à partir de l'image IR et de l'image RGB.

Suivant des modes de réalisation, l'unité de traitement peut comprendre tout moyen électronique ou informatique, tel qu'une puce électronique, un processeur, un calculateur, une tablette, un ordinateur, un serveur, etc.

### Description des figures et modes de réalisation

D'autres avantages et caractéristiques apparaîtront à l'examen de la description détaillée de modes de réalisation nullement limitatifs, et des dessins annexés sur lesquels :
- la FIGURE 1 est une représentation schématique d'un exemple de réalisation non limitatif d'un procédé selon l'invention ; et
- la FIGURE 2 est une représentation schématique d'un exemple de réalisation non limitatif d'un dispositif selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si c'est cette partie qui est uniquement suffisante pour conférer un avantage technique ou pour différencier l'invention par rapport à l'état de la technique antérieure.

En particulier, toutes les variantes et tous les modes de réalisation décrits sont combinables entre eux si rien ne s'oppose à cette combinaison sur le plan technique.

Sur les figures et dans la suite de la description, les éléments communs à plusieurs figures conservent la même référence.

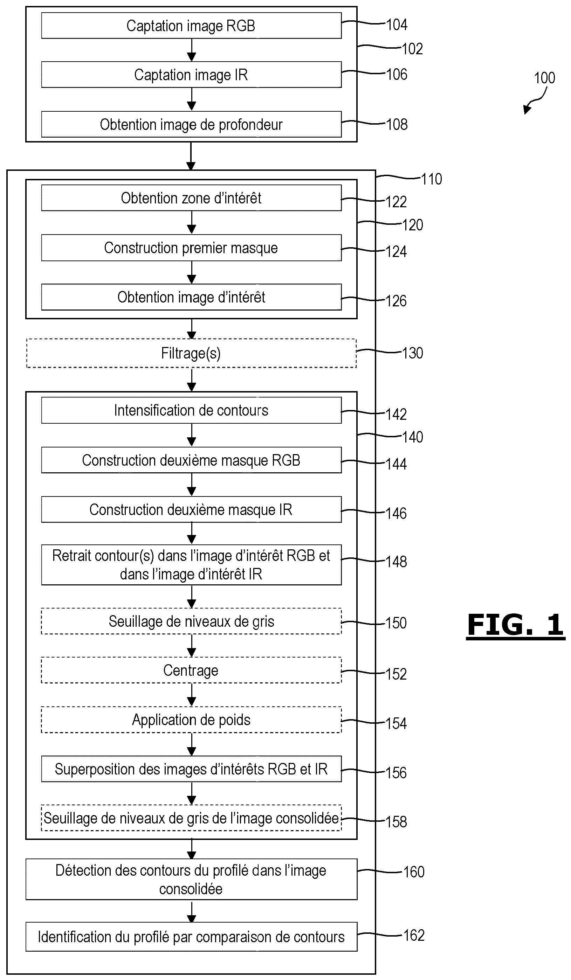

La FIGURE 1 est une représentation schématique d'un exemple de réalisation non limitatif d'un procédé selon la présente invention.

Le procédé 100 de la FIGURE 1 peut être utilisé pour l'identification de profilés, en particulier dans le domaine industriel, et en particulier à partir de la forme de la section dudit profilé.

Le procédé 100 comprend une phase 102 d'acquisition d'images du profilé.

La phase 102 d'acquisition d'images peut comprendre une étape 104 d'acquisition d'une image RGB du profilé par une caméra RGB, et une étape 106 d'acquisition d'une image infrarouge, IR, du profilé avec une caméra infrarouge. La phase 102 d'acquisition comprend en outre une étape 108 d'obtention d'une image de profondeur du profilé. Cette image de profondeur peut être captée par une caméra dédiée.

Alternativement, l'image de profondeur peut être obtenue, par construction, à partir d'au moins une desdites caméras IR et RGB. Ainsi, l'utilisation d'une caméra dédiée à l'acquisition de l'image de profondeur est évitée, ce qui diminue le coût de la solution proposée par la présente invention En effet, l'image de profondeur peut être obtenue à partir :
- d'images IR obtenues par une caméra IR stéréoscopique formée par deux caméras IR séparées d'une distance connue, dite baseline ; et
- l'image RGB obtenue par la caméra RGB.
La caméra IR stéréoscopique, ou les deux caméras IR droite et gauche formant la caméra stéréoscopique IR, permettent de calculer la distance pour chaque pixel et de l'appliquer sur l'image RGB pour obtenir une image de profondeur.

Le procédé 100 comprend ensuite une phase 110 de traitement.

La phase 110 de traitement comprend une étape 120 dont l'objectif est d'obtenir une image d'intérêt, correspondant à l'image du profilé, à partir de l'image RGB, respectivement à partir de l'image IR. L'image d'intérêt obtenue pour l'image RGB est appelée image d'intérêt RGB et l'image d'intérêt obtenue pour l'image IR est appelée image d'intérêt IR.

Pour l'image RGB, l'étape 120 comprend une étape 122 d'extraction d'une zone d'intérêt, appelée zone d'intérêt RGB, correspondant au profilé dans ladite image RGB. Suivant un exemple de réalisation, la zone d'intérêt RGB est obtenue en ne gardant dans ladite image RGB uniquement les points/pixels dont la distance est égale à une distance prédéterminée, ou est comprise dans une gamme de distances prédéterminée. La distance de chaque point (ou pixel) dans l'image RGB peut être obtenue grâce à l'image de profondeur qui indique la distance entre ledit point (ou pixel) et la position d'observation de la scène.

La distance prédéterminée peut être égale à la distance entre le point d'acquisition de l'image et la position du profilé par rapport audit point d'acquisition, éventuellement augmentée/diminuée d'une valeur d'incertitude. Cette ou ces valeurs peuvent être connues *a priori* en fonction de la position des caméras.

Lors d'une étape 124, un premier masque RGB est créé pour la zone d'intérêt RGB. Suivant un exemple de réalisation, le premier masque RGB peut être créé par dilatation de la zone d'intérêt RGB.

Lors d'une étape 126, l'image d'intérêt RGB est obtenue par convolution de l'image RGB acquise à l'étape 104 et du premier masque RGB obtenue à l'étape 124.

L'étape 120, c'est-à-dire les étapes 122-126, est répétée pour l'image IR pour obtenir une image d'intérêt IR.

L'étape 120 peut être réalisée à tour de rôle ou simultanément pour l'image RGB et l'image IR.

De manière optionnelle, mais avantageuse, la phase de traitement 110 peut comprendre, après l'étape 120, au moins une étape de filtrage 130 réalisant :
- au moins un filtrage de l'image d'intérêt RGB fournie par l'étape 120 ;
   et/ou
- au moins un filtrage de l'image d'intérêt IR fournie par l'étape 120.

Suivant des exemples de réalisation non limitatifs, l'étape de filtrage 130 peut réaliser, pour au moins une, en particulier chacune, des images d'intérêt RGB et IR :
- un filtrage bilatéral pour retirer du bruit de ladite image d'intérêt, tout en préservant les bords, en particulier les bords du profilé, dans ladite image d'intérêt ; et/ou
- un filtrage poivre et sel pour retirer du bruit dû à l'acquisition par une caméra numérique, le cas échéant.

La phase de traitement 110 comprend ensuite une étape 140 de construction d'une image consolidée à partir de l'image d'intérêt RGB, éventuellement filtrée, et de l'image d'intérêt IR, éventuellement filtrée.

L'étape 140 comprend une étape 142 réalisant une intensification de contours dans l'image d'intérêt RGB et dans l'image d'intérêt IR, par exemple par application d'un filtre 2D.

Lors d'une étape 144, un deuxième masque, dit deuxième masque RGB, est construit à partir de l'image d'intérêt RGB, par exemple par érosion de ladite image d'intérêt RGB, éventuellement filtrée.

Lors d'une étape 146, un deuxième masque, dit deuxième masque IR, est construite à partir de l'image d'intérêt IR, par exemple par érosion de ladite image d'intérêt IR, éventuellement filtrée.

Lors d'une étape 148, un ou des contours n'appartenant pas au profilé dans l'image d'intérêt RGB sont retirés par convolution de l'image d'intérêt RGB (éventuellement filtrée à l'étape 130) avec ledit deuxième masque RGB. De manière similaire, un ou des contours n'appartenant pas au profilé dans l'image d'intérêt IR sont retirés par convolution de l'image d'intérêt IR (éventuellement filtrée à l'étape 130) avec ledit deuxième masque IR.

Lors d'une étape optionnelle 150, un seuillage de niveaux de gris de type « Mise à Zéro » des pixels dont la valeur est supérieure à une valeur seuil prédéterminée, tel que par exemple 10, est appliqué à l'image d'intérêt RGB, et/ou à l'image d'intérêt IR, pour éliminer dans ladite image d'intérêt ou lesdites images d'intérêt, les pixels dont la couleur est noire ou proche du noir.

Lors d'une étape optionnelle 152, les images d'intérêt RGB et IR, éventuellement seuillées à l'étape 150, sont réalignées entre elles de sorte à aligner les contours du profilé dans lesdites images d'intérêt RGB et IR. Ainsi, lorsque le profilé ne se trouve pas au même emplacement dans les images IR et RGB, et donc sur les images d'intérêt IR et RGB, cette étape 152 de recentrage permet d'éliminer le décalage en position du profilé sur lesdites images d'intérêts.

L'étape de recentrage peut être réalisée de différentes manières. Suivant un exemple de réalisation, l'étape de recentrage peut comprendre les opérations suivantes :
- recherche, dans l'une desdites images d'intérêt IR et RGB, d'un motif présent dans l'autre desdites images d'intérêt IR et RGB, par exemple par corrélation desdites images d'intérêt IR et RGB ;
- modification de la position d'au moins une desdites images d'intérêt pour aligner ledit motif dans lesdites images d'intérêt, et
- éventuellement, modification de la taille d'au moins une desdites images d'intérêt de sorte à obtenir la même taille pour lesdites images d'intérêt, par exemple par rognage de ladite image d'intérêt.

Lors d'une étape optionnelle 154, des poids différents sont appliqués auxdites images d'intérêt. En particulier, un poids plus grand est appliqué à l'image d'intérêt IR comparée à l'image d'intérêt RGB.

Lors d'une étape 156, une image consolidée est obtenue par ajout, ou superposition, de l'image d'intérêt RGB à ladite image d'intérêt IR.

Lors d'une étape optionnelle 158, un seuillage, de type « Binaire » pour les pixels supérieurs à une valeur seuil prédéterminée, par exemple 200, est appliqué sur les niveaux de gris de l'image consolidée pour ne conserver que les pixels blancs dans ladite image consolidée.

L'étape 140 fournit donc une image consolidée comprenant les contours du profilé. Cette image consolidée est peu sensible la variation de conditions d'utilisation, telle que par exemple à une variation de la luminosité ou la présence d'autres profilés en arrière plan, et ne nécessite pas l'utilisation d'optiques d'imagerie spécifiques et/ou coûteuses.

Le procédé 100 comprend en outre une étape 160 de détection des contours du profilé dans l'image consolidée fournie par l'étape 140. Cette détection de contours peut être réalisée selon toute technique connue de détection de contours.

Les contours détectés lors de l'étape 160, sont comparés à des contours mémorisés dans une base de données pour identifier le profilé imagé, lors d'une étape 162. Cette comparaison peut par exemple être réalisée selon toute technique connue, par exemple par corrélation.

Ainsi, le procédé 100 peut être utilisé pour identifier tout type de profilé, ou pièces de profilé, à partir d'images dudit profilé, et en particulier d'images de la section du profilé, dès lors que le contour dudit profilé est mémorisé dans une base de données de profilés.

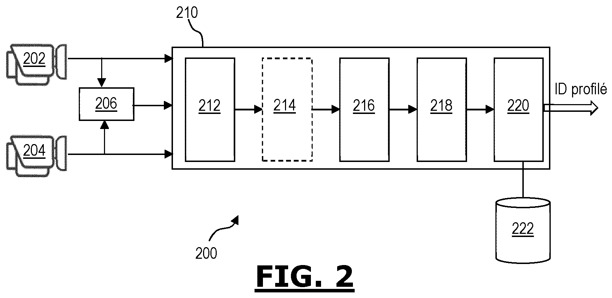

La FIGURE 2 est une représentation schématique d'un exemple de réalisation non limitatif d'un dispositif selon la présente invention.

Le dispositif 200 de la FIGURE 2 peut être utilisé pour l'identification de profilés, en particulier dans le domaine industriel.

Le dispositif 200 de la FIGURE 2 peut être utilisé pour mettre en œuvre un procédé selon l'invention, et en particulier le procédé 100 de la FIGURE 1.

Le dispositif 200 comprend une caméra RGB 202 pour acquérir une image RGB d'un profilé à identifier.

Le dispositif 200 comprend en outre une caméra IR 204 pour acquérir une image IR dudit profilé à identifier. La caméra 204 peut être une unique caméra IR. Alternativement, la caméra 204 peut être une caméra IR stéréoscopique comprenant une première caméra IR, dite caméra IR droite, et une deuxième caméra IR, dite caméra IR gauche, disposées à une distance connue l'une de l'autre, appelée baseline.

Le dispositif 200 comprend en outre un module de calcul 206 pour construire une image de profondeur à partir des images captées par au moins une desdites caméras 202 et 204. En particulier, lorsque la caméra 204 est une caméra IR stéréoscopique, elle fournit deux images IR : une image IR gauche et une image IR droite. Dans ce cas, lesdites images IR gauche et droite peuvent être utilisées pour calculer la distance pour chaque pixel et de l'appliquer sur l'image RGB pour obtenir une image de profondeur.

Le dispositif 200 comprend en outre une unité de traitement 210. L'unité de traitement 210 est configurée pour réaliser la phase de traitement du procédé selon l'invention, et en particulier la phase de traitement 110 du procédé 100 de la FIGURE 1.

L'unité de traitement 210 comprend un module 212 pour obtenir à partir de l'image RGB une image d'intérêt RGB, et à partir de l'image IR une image d'intérêt IR. Le module 212 est en particulier configuré pour mettre en œuvre l'étape 120 du procédé 100 de la FIGURE 1

L'unité de traitement 210 comprend un module 214, optionnel, pour filtrer l'image d'intérêt RGB, et/ou pour filtrer l'image d'intérêt IR, fournie(s) par le module 212. Le module 214 est en particulier configuré pour mettre en œuvre l'étape 130 du procédé 100 de la FIGURE 1.

L'unité de traitement 210 comprend un module 216 pour construire une image consolidée à partir de l'image d'intérêt RGB et de l'image d'intérêt IR, éventuellement filtrée(s). Le module 216 est en particulier configuré pour mettre en œuvre l'étape 140 du procédé 100 de la FIGURE 1.

L'unité de traitement 210 comprend un module 218 pour extraire le contour du profilé depuis une image consolidée, fournie par le module 216. Le module 218 est en particulier configuré pour mettre en œuvre l'étape 160 du procédé 100 de la FIGURE 1.

L'unité de traitement 210 comprend un module 220 pour comparer le contour extrait de l'image consolidée à des contours mémorisés dans une base de données 222, pour identifier le profilé. Le module 220 est en particulier configuré pour mettre en œuvre l'étape 162 du procédé 100 de la FIGURE 1.

L'unité de traitement 210 peut être :
- une unité matérielle, telle qu'un serveur, un ordinateur, une tablette, un calculateur, un processeur, une puce informatique ; ou
- une unité logicielle, tel qu'un programme d'ordinateur ; ou encore
- une combinaison d'au moins une unité logicielle avec au moins une unité matérielle.

Au moins l'un des modules 206, 212-220 décrits ci-dessus peut être un module matériel, tel qu'un serveur, un ordinateur, une tablette, un calculateur, un processeur, une puce informatique.

Au moins l'un des modules 206, 212-220 décrits ci-dessus peut être un module logiciel, tel qu'un programme d'ordinateur, une application, etc.

Au moins l'un des modules 206, 212-220 décrits ci-dessus peut être une combinaison d'au moins un module logiciel et d'au moins un module matériel.

Au moins l'un des modules 206, 212-220 décrits ci-dessus peut être un module individuel et indépendant des autres modules.

Au moins deux des modules 206, 212-220 décrits ci-dessus peuvent être intégrés au sein d'un même module logiciel ou matériel.

Bien entendu l'invention n'est pas limitée aux exemples qui viennent d'être décrits.

## Revendications

1. Procédé (100) d'identification d'un profilé, en particulier d'un profilé de pièce, ledit procédé (100) comprenant une phase (102) d'acquisition d'images pour obtenir une image RGB, une image infrarouge, IR, et une image de profondeur dudit profilé, ledit procédé (100) comprenant en outre une phase (110) de traitement comprenant les étapes suivantes :
- extraction (120) dans ladite image RGB, respectivement dans ladite image IR, d'une zone d'intérêt correspondant audit profilé, à l'aide de l'image de profondeur et mémorisation de ladite zone d'intérêt comme image d'intérêt RGB, respectivement comme image d'intérêt IR ;
- construction (140) d'une image consolidée à partir desdites images d'intérêt RGB et IR, ladite construction comprenant les étapes suivantes :
- intensification (142) de contours dans l'image d'intérêt RGB, respectivement dans l'image d'intérêt IR,
- construction (144) d'un deuxième masque, dit deuxième masque RGB, à partir de l'image zone d'intérêt RGB,
- construction (146) d'un deuxième masque, dit deuxième masque IR, à partir de ladite image d'intérêt IR,
- retrait (148) de contours n'appartenant pas au profilé dans l'image d'intérêt RGB par convolution de ladite image d'intérêt RGB avec ledit deuxième masque RGB, et
- retrait (148) de contours n'appartenant pas au profilé dans l'image d'intérêt IR par convolution de ladite image d'intérêt IR avec ledit deuxième masque IR, et
- obtention (156) de l'image consolidée par ajout, ou superposition, de ladite image d'intérêt RGB à ladite image d'intérêt IR ;
- détection (160) du contour dudit profilé dans ladite image consolidée ; et
- identification (162) dudit profilé par comparaison dudit contour à une base de données de contours de profilés.

2. Procédé (100) selon la revendication précédente, **caractérisé en ce que**, lors de la phase d'acquisition :
- l'image IR est captée par une caméra infrarouge (204),
- l'image RGB est captée par une caméra RGB (202), et
- l'image de profondeur est obtenue, par construction, à partir d'au moins une desdites caméra infrarouge (204) et caméra RGB (202).

3. Procédé (100) selon l'une quelconque des revendications précédentes, **caractérisé en ce que** l'étape (120) d'extraction d'une zone d'intérêt dans l'image IR, respectivement dans l'image RGB, comprend une conservation (122) de points de ladite image se trouvant à une distance, ou dans une gamme de distances, prédéterminée dans l'image de profondeur, lesdits points formant une zone d'image IR, respectivement une zone d'image RGB.

4. Procédé (100) selon la revendication précédente, **caractérisé en ce que** l'étape (120) d'extraction comprend en outre les étapes suivantes :
- construction (124) d'un premier masque, dit premier masque RGB, à partir de la zone d'image RGB,
- construction (124) d'un premier masque, dit premier masque IR, à partir de la zone d'image IR ;
- obtention de (126) l'image d'intérêt RGB par convolution de l'image RGB avec ledit premier masque RGB, et
- obtention (126) de l'image d'intérêt IR par convolution de l'image RGB avec ledit premier masque IR.

5. Procédé (100) selon l'une quelconque des revendications précédentes, **caractérisé en ce qu'**il comprend, avant l'étape (140) de construction de l'image consolidée, une étape (130) de filtrage de l'image d'intérêt IR, et/ou de filtrage de l'image d'intérêt RGB, ladite image consolidée étant réalisée à partir de ladite image d'intérêt IR ainsi filtrée, et/ou de ladite image d'intérêt IR ainsi filtrée.

6. Procédé (100) selon l'une quelconque des revendications précédentes, **caractérisé en ce que** l'étape (140) de construction de l'image consolidée comprend en outre une étape (152) de recentrage des images d'intérêt IR et RGB de sorte à aligner les contours du profilé dans lesdites images d'intérêt.

7. Procédé (100) selon la revendication précédente, caractérisé en ce l'étape (152) de recentrage comprend les étapes suivantes :
- recherche, dans l'une desdites images d'intérêt IR et RGB, d'un motif présent dans l'autre desdites images d'intérêt IR et RGB,
- modification de la position d'au moins une desdites images d'intérêt IR et RGB pour aligner ledit motif dans lesdites images d'intérêt, et
- éventuellement, redimensionnement de la taille d'au moins une desdites images d'intérêt de sorte à obtenir la même taille pour lesdites images d'intérêt.

8. Procédé (100) selon l'une quelconque des revendications 1 à 7, **caractérisé en ce que** l'ajout (156) de ladite image d'intérêt RGB à ladite image d'intérêt IR est réalisée en affectant des poids différents auxdites images d'intérêt.

9. Procédé (100) selon l'une quelconque des revendications 1 à 8, **caractérisé en ce que** l'étape (140) de construction de l'image consolidée comprend en outre une étape (150) de seuillage sur les niveaux de gris de l'image d'intérêt RGB obtenue à l'étape (148) de retrait, respectivement de l'image d'intérêt IR obtenue à l'étape (148) de retrait, pour éliminer dans ladite image d'intérêt les pixels dont la couleur est noire ou proche du noir.

10. Procédé (100) selon l'une quelconque des revendications 1 à 9, caractérisé en ce l'étape (140) de construction de l'image consolidée comprend en outre une étape (158) de seuillage sur les niveaux de gris de l'image consolidée pour ne conserver que les pixels blancs dans ladite image consolidée.

11. Programme d'ordinateur comprenant des instructions exécutables qui, lorsqu'elles sont exécutées par un appareil informatique, mettent en en œuvre toutes les étapes de la phase de traitement (110) du procédé (100) selon l'une quelconque des revendications précédentes.

12. Dispositif (200) d'identification d'un profilé comprenant des moyens (202,204,206, 210,212-220) configurés pour mettre en œuvre toutes les étapes du procédé (100) selon l'une quelconque des revendications 1 à 10.

13. Dispositif selon la revendication précédente, **caractérisé en ce qu'**il comprend :
- au moins un moyen d'acquisition (202,204,206) d'une image IR, d'une image RGB et d'une image de profondeur, dudit profilé ; et
- au moins une unité de traitement (210) configurée pour réaliser la phase de traitement (110) du procédé (100) d'identification d'un profilé selon l'une quelconque des revendications 1 à 10 ; et
- éventuellement, au moins une dalle ou ring de lumière éclairant ledit profilé.

## Patentansprüche

1. Verfahren (100) zur Identifizieren eines Profils, insbesondere eines Werkstückprofils, wobei das Verfahren (100) eine Bilderfassungsphase (102) umfasst, um ein RGB-Bild, ein Infrarotbild (IR-Bild) und ein Tiefenbild des Profils zu erhalten, wobei das Verfahren (100) ferner eine Verarbeitungsphase (110) umfasst, die folgenden Schritte umfasst:
- Extrahieren (120) eines dem Profil entsprechenden Bereichs von Interesse in dem RGB-Bild beziehungsweise in dem IR-Bild mit Hilfe des Tiefenbildes und Abspeichern des Bereichs von Interesses als RGB-Bild von Interesse beziehungsweise als IR-Bild von Interesse;
- Konstruieren (140) eines konsolidierten Bildes aus dem RGB-Bild und dem IR-Bild von Interesse, wobei das Konstruieren die folgenden Schritte umfasst:
- Intensivieren (142) von Konturen in dem RGB-Bild von Interesse beziehungsweise in dem IR-Bild von Interesse,
- Konstruieren (144) einer als zweite RGB-Maske bezeichneten zweiten Maske aus dem RGB-Bild des Bereichs von Interesse,
- Konstruieren (146) einer als zweite IR-Maske bezeichneten zweiten Maske aus dem IR-Bild von Interesse,
- Entfernen (148) von Konturen, die nicht zu dem Profil in dem RGB-Bild von Interesse gehören, durch Faltung des RGB-Bildes von Interesse mit der zweiten RGB-Maske, und
- Entfernen (148) von Konturen, die nicht zu dem Profil in dem IR-Bild von Interesse gehören, durch Faltung des IR-Bildes von Interesse mit der zweiten IR-Maske, und
- Erlangen (156) des konsolidierten Bildes durch Hinzufügung des RGB-Bilds von Interesse zu dem IR-Bild von Interesse oder Überlagern des RGB-Bilds von Interesse mit dem IR-Bild von Interesse;
- Erfassen (160) der Kontur des Profils in dem konsolidierten Bild; und
- Identifizierung (162) des Profils durch Vergleich der Kontur mit einer Datenbank von Profilkonturen.

2. Verfahren (100) nach dem vorstehenden Anspruch,
**dadurch gekennzeichnet, dass**, während der Erfassungsphase:
- das IR-Bild von einer Infrarotkamera (204) aufgenommen wird,
- das RGB-Bild von einer RGB-Kamera (202) aufgenommen wird, und
- das Tiefenbild durch Konstruieren ausgehend von mindestens einer von der Infrarotkamera (204) und der RGB-Kamera (202) erhalten wird.

3. Verfahren (100) nach einem der vorstehenden Ansprüche,
**dadurch gekennzeichnet, dass** der Schritt (120) des Extrahierens eines Bereichs von Interesse in dem IR-Bild beziehungsweise in dem RGB-Bild das Beibehalten (122) von Punkten des Bildes, die sich in dem Tiefenbild in einer vorbestimmten Entfernung oder in einem vorbestimmten Entfernungsbereich befinden, umfasst, wobei die Punkte einen IR-Bildbereich beziehungsweise einen RGB-Bildbereich bilden.

4. Verfahren (100) nach dem vorstehenden Anspruch,
**dadurch gekennzeichnet, dass** der Schritt (120) des Extrahierens ferner die folgenden Schritte umfasst:
- Konstruktion (124) einer als erste RGB-Maske bezeichneten ersten Maske aus dem RGB-Bildbereich,
- Konstruieren (124) einer als erste IR-Maske bezeichneten ersten Maske aus dem IR-Bildbereich;
- Gewinnen (126) des RGB-Bild von Interesse durch Faltung des RGB-Bildes mit der ersten RGB-Maske, und
- Gewinnen (126) des IR-Bild von Interesse durch Faltung des RGB-Bildes mit der ersten IR-Maske.

5. Verfahren (100) nach einem der vorstehenden Ansprüche,
**dadurch gekennzeichnet, dass** es vor dem Schritt (140) des Konstruierens des konsolidierten Bildes einen Schritt (130) des Filterns des IR-Bilds von Interesse und/oder des Filterns des RGB-Bilds von Interesse umfasst, wobei das konsolidierte Bild aus dem so gefilterten IR-Bild von Interesse und/oder aus dem so gefilterten IR-Bild von Interesse erstellt wird.

6. Verfahren (100) nach einem der vorstehenden Ansprüche,
**dadurch gekennzeichnet, dass** der Schritt (140) des Konstruierens des konsolidierten Bildes ferner einen Schritt (152) des Neuzentrierens des IR-Bilds und des RGB-Bilds von Interesse umfasst, um die Konturen des Profils in den Bildern von Interesse auszurichten.

7. Verfahren (100) nach dem vorstehenden Anspruch,
**dadurch gekennzeichnet, dass** der Schritt (152) des Neuzentrierens die folgenden Schritte umfasst:
- Suchen in einem von dem IR-Bild und dem RGB-Bild von Interesse nach einem Motiv, das in dem anderen von dem IR-Bild und dem RGB-Bild von Interesse vorhanden ist,
- Modifizieren der Position mindestens eines von dem IR-Bild und dem RGB-Bild von Interesse zum Ausrichten des Motivs in den Bildern von Interesse, und
- gegebenenfalls Neudimensionieren der Größe mindestens eines der Bilder von Interesse derart, dass die gleiche Größe für die Bilder von Interesse erhalten wird.

8. Verfahren (100) nach einem der Ansprüche 1 bis 7,
**dadurch gekennzeichnet, dass** das Hinzufügen (156) des RGB-Bilds von Interesse zu dem IR-Bild von Interesse durch Zuweisen unterschiedlicher Gewichtungen zu den Bildern von Interesse durchgeführt wird.

9. Verfahren (100) nach einem der Ansprüche 1 bis 8,
**dadurch gekennzeichnet, dass** der Schritt (140) des Konstruierens des konsolidierten Bildes ferner einen Schritt (150) der Schwellenwertbildung bei den Graustufen des im Schritt (148) des Entfernens erhaltenen RGB-Bilds von Interesse, beziehungsweise des im Schritt (148) des Entfernens erhaltenen IR-Bilds von Interesse, umfasst, um in dem Bild von Interesse die Pixel zu eliminieren, deren Farbe schwarz oder nahezu schwarz ist.

10. Verfahren (100) nach einem der Ansprüche 1 bis 9,
**dadurch gekennzeichnet, dass** der Schritt (140) des Konstruierens des konsolidierten Bildes ferner einen Schritt (158) der Schwellenwertbildung bei den Graustufen des konsolidierten Bildes umfasst, um nur die weißen Pixel in dem konsolidierten Bild beizubehalten.

11. Computerprogramm, umfassend ausführbare Anweisungen, die, wenn sie von einem Computergerät ausgeführt werden, alle Schritte der Verarbeitungsphase (110) des Prozesses (100) gemäß einem der vorstehenden Ansprüche implementieren.

12. Vorrichtung (200) zur Identifizierens eines Profils, umfassend Mittel (202, 204, 206, 210, 212 bis 220), die konfiguriert sind, um alle Schritte des Verfahrens (100) nach einem der Ansprüche 1 bis 10 durchzuführen.

13. Vorrichtung nach dem vorstehenden Anspruch,
**dadurch gekennzeichnet, dass** sie Folgendes umfasst:
- mindestens ein Erfassungsmittel (202, 204, 206) für ein IR-Bild, ein RGB-Bild und ein Tiefenbild des Profils; und
- mindestens eine Verarbeitungseinheit (210), die konfiguriert ist, um die Verarbeitungsphase (110) des Verfahrens (100) zum Identifizierens eines Profils nach einem der Ansprüche 1 bis 10 durchzuführen; und
- gegebenenfalls mindestens eine Lichtplatte oder einen Lichtring, die/der das Profil beleuchtet.

## Claims

1. Method (100) for identifying a profile, in particular a workpiece profile, said method (100) comprising an image acquisition phase (102) for obtaining an RGB image, an infrared image, IR, and a depth image of said profile, said method (100) further comprising a processing phase (110) comprising the following steps:
- extracting (120) from said RGB image and from said IR image, respectively, an area of interest corresponding to said profile, using the depth image, and storing said area of interest as an RGB image of interest and as an IR image of interest, respectively;
- constructing (140) a consolidated image from said RGB and IR images of interest, said construction comprising the following steps:
- intensifying (142) contours in the RGB image of interest and in the IR image of interest,
- constructing (144) a second mask, referred to as a second RGB mask, from the RGB area-of-interest image,
- constructing (146) a second mask, referred to as a second IR mask, from said IR image of interest,
- removing (148) contours not belonging to the profile in the RGB image of interest by convolution of said RGB image of interest with said second RGB mask, and
- removing (148) contours not belonging to the profile in the IR image of interest by convolution of said IR image of interest with said second IR mask, and
- obtaining (156) the consolidated image by adding, or superimposing, said RGB image of interest to said IR image of interest;
- detecting (160) the contour of said profile in said consolidated image; and
- identifying (162) said profile by comparing said contour with a database of profile contours.

2. Method (100) according to the preceding claim, **characterized in that,** during the acquisition phase:
- the IR image is captured by an infrared camera (204),
- the RGB image is captured by an RGB camera (202), and
- the depth image is obtained, by construction, from at least one of said infrared camera (204) and RGB camera (202).

3. Method (100) according to any one of the preceding claims,
**characterized in that** the step (120) of extracting an area of interest in the IR image and in the RGB image comprises retaining (122) points of said image located at a predetermined distance, or within a range of distances, in the depth image, said points forming an IR image area and an RGB image area, respectively.

4. Method (100) according to the preceding claim, **characterized in that** the extraction step (120) further comprises the following steps:
- constructing (124) a first mask, referred to as a first RGB mask, from the RGB image area,
- constructing (124) a first mask, referred to as a first IR mask, from the IR image area;
- obtaining (126) the RGB image of interest by convolution of the RGB image with said first RGB mask, and
- obtaining (126) the IR image of interest by convolution of the RGB image with said first IR mask.

5. Method (100) according to any one of the preceding claims,
**characterized in that** it comprises, before the step (140) of constructing the consolidated image, a step (130) of filtering the IR image of interest, and/or filtering the RGB image of interest, said consolidated image being produced from said IR image of interest thus filtered, and/or from said IR image of interest thus filtered.

6. Method (100) according to any one of the preceding claims,
**characterized in that** the step (140) of constructing the consolidated image further comprises a step (152) of recentering the IR and RGB images of interest so as to align the contours of the profile in said images of interest.

7. Method (100) according to the preceding claim, **characterized in that** the recentering step (152) comprises the following steps:
- searching, in one of said IR and RGB images of interest, for a pattern present in the other of said IR and RGB images of interest,
- modifying the position of at least one of said IR and RGB images of interest to align said pattern in said images of interest, and
- optionally, resizing at least one of said images of interest so as to obtain the same size for said images of interest.

8. Method (100) according to any one of claims 1 to 7, **characterized in that** the addition (156) of said RGB image of interest to said IR image of interest is performed by assigning different weights to said images of interest.

9. Method (100) according to any one of claims 1 to 8, **characterized in that** the step (140) of constructing the consolidated image further comprises a step (150) of grayscale thresholding of the RGB image of interest obtained in the removal step (148) and of the IR image of interest obtained in the removal step (148), in order to remove the pixels of which the color is black or close to black from said image of interest.

10. Method (100) according to any one of claims 1 to 9, **characterized in that** the step (140) of constructing the consolidated image further comprises a step (158) of grayscale thresholding of the consolidated image to retain only the white pixels in said consolidated image.

11. Computer program comprising executable instructions which, when they are executed by a computing device, implement all the steps of the processing phase (110) of the method (100) according to any one of the preceding claims.

12. Device (200) for identifying a profile comprising means (202, 204, 206, 210, 212-220) configured to implement all the steps of the method (100) according to any one of claims 1 to 10.

13. Device according to the preceding claim, **characterized in that** it comprises:
- at least one means (202, 204, 206) for acquiring an IR image, an RGB image and a depth image of said profile; and
- at least one processing unit (210) configured to perform the processing phase (110) of the profile identification method (100) according to any of claims 1 to 10; and
- optionally, at least one panel or ring of light illuminating said profile.
